# EUROPÄISCHE PATENTSCHRIFT

(11) **EP 1 284 207 B1**
(45) Veröffentlichungstag und Bekanntmachung des Hinweises auf die Patenterteilung: **23.11.2005**
(21) Anmeldenummer: 02090270.6
(22) Anmeldetag: 19.07.2002
(51) Int. Cl.: B60F 1/04, B61D 15/00, B61K 5/02

(54) **Zweiwegefahrzeugkran zum kombinierten Strassen- und Schieneinsatz sowie Aufgleisverfahren**
Bimodal rail-road crane and rail engagement method
Grue bimodale rail-route et méthode d'engagement des rails

(30) Priorität: 13.08.2001 DE 10139393
(43) Veröffentlichungstag der Anmeldung: 19.02.2003
(73) Patentinhaber: Gottwald Port Technology GmbH, 40597 Düsseldorf (DE)
(72) Erfinder: Rode, Ralf, 41366 Schwalmtal (DE); Sprave, Klaus, 41564 Kaarst (DE)
(74) Vertreter: Moser & Götze

(56) Entgegenhaltungen:
- EP-A- 0 136 219
- DE-A- 19 948 143
- DE-C- 196 240
- FR-A- 2 671 570
- FR-A- 2 818 930
- US-A- 4 240 354
- US-A- 4 520 735
- US-A- 4 534 297
- US-A- 5 154 124
- US-A- 5 220 870
- US-A- 5 642 673

## Beschreibung

Die Erfindung betrifft einen Zweiwegefahrzeugkran zum kombinierten Straßen- und Schieneneinsatz, mit einem zur Schienenfahrt des Gerätes vom Boden abhebbarem Straßenfahrwerk und einem Schienenfahrwerk, bestehend aus mindestens je einem vorne und hinten an das Fahrgestell des Gerätes anschließbaren Schienendrehgestell, sowie mit einem einem wipp- und schwenkbaren Kranausleger sowie ein Aufgleisverfahren für einen solchen Zweiwegefahrzeugkran.

Zweiwegefahrzeuge für den kombinierten Einsatz auf der Straße und auf der Schiene sind an sich bekannt. Die bekannten Geräte können sowohl als Schienenkrane, beispielsweise zum Bergen von Schienenfahrzeugen oder zur Gleisverlegung, als auch-als straßengängiger Fahrzeugkrane im Baustellbetrieb eingesetzt werden. Der besondere Vorteil dieser Geräte besteht darin, dass das Fahrzeug nach der Anfahrt auf der Straße oder im Gelände in relativ kurzer Zeit auf die Schienen aufgegleist werden kann.

Aus dem Prospekt "Demag-Teleskopkran AC50R auf Straße und Schiene" ist ein Zweiwegefahrzeugkran bekannt geworden, der mit je einem fest mit dem Fahrgestell des Kranfahrzeuges verbundenen vorderen und hinteren Schienenfahrwerk ausgerüstet ist. Das Schienenfahrwerk ist hydraulisch von dem Gleis abheb- und auf dieses absenkbar, beim Absenken des Schienenfahrwerkes wird gleichzeitig das Kranfahrzeug so weit abgehoben, so dass die Räder des Straßenfahrwerkes den Kontakt mit dem Untergrund verlieren.

Die fest am Gerät angeordneten Schienenfahrwerke zeigen sich aber oftmals bei der Straßenfahrt und beim Arbeiten des Gerätes im Straßenbetrieb auf Baustellen als hinderlich, zudem stellen die fest installierten Schienenfahrwerke ein zusätzliches Krangewicht dar, das die Traglast des Gesamtgerätes schmälert, wenn im gleislosen Betrieb gearbeitet wird. Es würde also sinnvoll sein, die Schienenfahrzeuge im Straßenbetrieb abzunehmen und nur für die Schienenfahrt zu adaptieren. Dabei sollte der im Wechsel von der einen Betriebsart in die andere ohne großen Zeitverlust vorgenommen werden können.

Aus der gattungsbildenden deutschen Patentanmeldung DE 199 48 143 A1 ist ein solcher Zweiwegefahrzeugkran bekannt geworden, bei dem die vorne und hinten am Fahrgestell des Gerätes befestigten Schienenfahrwerke zur Straßenfahrt abnehmbar sind und zur Schienenfahrt mittels einer Schnellverbindung automatisch oder manuell mit dem Fahrwerksrahmen des angehobenen Straßenfahrzeuges verbindbar sind. Die bekannte Lösung hat den Vorteil, dass die erfindungsgemäßen Drehgestelle nicht ständig mit dem Fahrzeug mitzuführen sind; nur bei Bedarf werden die Schienendrehgestellte unabhängig vom Zweiwegefahrzeugkran zum Einsatzort transportiert, um dort auf die Gleise gehoben und mit dem Fahrzeug verbunden zu werden.

Nachteilig bei dieser geschilderten Lösung ist es, dass der Aufgleisvorgang des Zweiwegefahrzeugkranes relativ lange dauert. In der Regel werden beide Schienendrehgestelle mit dem eigenen Zweiwegefahrzeugkran nacheinander auf das Gleis gestellt, bevor der Zweiwegefahrzeugkran im Straßenbetrieb über das Gleis fährt. Sodann muss der Zweiwegefahrzeugkran so ausgerichtet und angehoben werden, das die Schnellkupplungen ein Ankuppeln der Schienendrehgestelle am vorderen und hinteren Fahrgestellende ermöglicht. Dieser Vorgang ist zeitaufwendig und häufig nicht in den kurzen Betriebspausen der Bahn möglich.

Die DE 196 43 240 C1 offenbart ein straßen- und schienenverfahrbares Antriebsfahrzeug mit bereiften Bodenrädem auf zwei Achsen, von denen wenigstens eine als Pendelachse ausgebildet ist, sowie mit jeweils aus einer Achse und zwei Schienenrädem bestehenden Schienenradsätzen. Die Schienenradsätze sind den Bodenradachsen zugeordnet und sind jeweils mittels einer hydraulisch betätigten Verstelleinrichtung höhenverschwenkbar. Hierbei sind die Anschlusspunkte für die Verstelleinrichtung des Schienenradsatzes in am Achsgehäuse der Bodenradachse angeformten oder angeschweißten Anschlussteilen vorgesehen. Die Schienenradsätze sind fest mit dem Fahrzeug verbunden und über Hydraulikzylinder verschwenkbar.

Aufgabe der vorliegenden Erfindung ist es, ausgehend von dem beschriebenen Stand der Technik einen Zweiwegefahrzeugkran der gattungsgemäßen Art so auszubilden, dass bei im Straßenbetrieb demontierbaren Schienendrehgestellen das Aufgleisen und Abgleisen des Gerätes zum Schienenbetrieb in kürzester Zeit möglich ist, während das Montieren und Demontieren der Schienendrehgestelle außerhalb des Gleises erfolgen kann.

Zur Lösung der Aufgabe wird erfindungsgemäß vorgeschlagen, dass jedes Schienendrehgestell derart um eine horizontal und quer zur Fahrzeuglängsachse verlaufende Schwenkachse klappbar an dem Fahrgestell des Gerätes anlenkbar ist und zur Schienenfahrt um diese Schwenkachse mittels des Kranauslegers aus einer oberen Ruhestellung in seine aufgeschiente Transportstellung verschwenkbar ist.

Femer ist nach der Erfindung vorgesehen, dass im Abstand von der quer zur Fahrzeuglängsachse verlaufenden Schwenkachse an jedem Schienendrehgestell bzw. jedem Zwischenrahmen mindestens ein Anlenkpunkt für ein Zugglied vorgesehen ist. Dieses nachfolgend noch beschriebene Zugglied dient zum Halten und Verschwenken des Schienendrehgestells zwischen der Ruhe- und der Transportstellung, indem es eine Zug- und Haltekraft in den Anlenkpunkt einleitet.

Zusätzlich ist der Erfindung vorgesehen, dass das Zugglied einerseits mit dem Anlenkpunkt-und-andererseits mit dem oberhalb-des Schienendrehgestells bzw. jedes Zwischenrahmens positionierbaren Kranausleger verbindbar ist. Ohne zusätzliche Hilfseinrichtungen und Hydraulikeinrichtungen kann mit dieser vorgesehenen Lösung das Aufgleisen der Schienendrehgestelle vorgenommen werden, und zwar durch Heben und Senken des Kranauslegers, an dessen Unterseite das Zugglied ebenso befestigt ist, wie am Anlenkpunkt am Schienendrehgestell bzw. Zwischenrahmen. Auf diese Weise kann mit dem Kranausleger zuerst das eine Schienendrehgestell aufgegleist werden, und nach Verschwenken des Kranauslegers um 180° das zweite Schienendrehgestellt. Der Aufgleisvorgang ist somit in kürzester Zeit mit an Bord befindlichen Hilfsmitteln möglich, so dass eine äußerst einfache, funktionelle und kostengünstige Lösung geschaffen wurde.

Die vorgeschlagene Lösung ermöglicht in günstiger Weise ein Montieren der Schienendrehgestelle außerhalb der Gleise, mit dem eigenen Kran, so dass während des Montagevorganges das Gleis nicht blockiert ist. Dadurch wird die zum eigentlichen Aufgleisen erforderlich Rüstzeit deutlich verkürzt. Da die Schienendrehgestelle abnehmbar am Fahrgestell angeordnet sind und während des Straßenbetriebs abmontiert werden können, wir auch die Traglast des Gesamtgerätes beim Straßenbetrieb nicht geschmälert. Ähnlich wie beim Stand der Technik sind die Schienendrehgestelle abnehmbar und separat transportierbar, jedoch beansprucht der Aufgleisvorgang selbst weniger Zeit, weil die Schienendrehgestelle beim Fahren des Zweiwegefahrzeugkranes über das Gleis bereits am Fahrgestell angelenkt sind.

Ein entsprechend angepasstes Schienendrehgestell kann unmittelbar am Fahrgestell des Gerätes angelenkt sein; es ist jedoch nach einem anderen Merkmal der Erfindung vorgesehen, dass zwischen jedem Schienendrehgestell und dem Fahrgestell des Gerätes je ein Zwischenrahmen vorgesehen ist, mit dem das daran befestigte Schienendrehgestell am Fahrgestell des Gerätes klappbar angelenkt ist.

Der Anlenkpunkt für das Zugglied am Drehgestell bzw. Zwischenrahmen kann nach einem weiteren Merkmal der Erfindung auch mit dem Fahrgestell des Gerätes verbunden werden. Das ist vor allem dann von Bedeutung, wenn eine Sicherung des hochgeklappten Fahrgestell im Straßenbetrieb erforderlich ist.

Das Zugglied nach der Erfindung besteht vorzugsweise aus einem Seil, einer Kette oder einer Stange. Da zum Anheben und Absenken des Schienendrehgestelles lediglich eine starre Verbindung zwischen dem Kranausleger und dem Schienendrehgestell hergestellt werden muss, reichen solche einfachen Zugglieder aus. Sollte nach einem weiteren Merkmal der Erfindung das Zugglied aus einem Spannzug besteht, so kann das Aufgleisen und Anheben des Schienendrehgestells auch ohne Verschwenkung des Kranauslegers erfolgen, insbesondere, wenn das Zugglied zwischen dem Schienendrehgestell bzw. dem Zwischenrahmen und dem Fahrgestell des Gerätes angeordnet ist.

Vorzugsweise ist jedes Schienendrehgestell bzw. jeder Zwischenrahmen in seiner aufgegleisten Transportstellung und in seiner Ruhestellung in seiner jeweiligen Stellung abgesichert festlegbar. Die Festlegung erfolgt vorzugsweise durch Bolzensteckverbindungen in Bohrungen zwischen dem Schienendrehgestell bzw. Zwischenrahmen und im Fahrgestell des Gerätes.

Ein typisches Aufgleisverfahren eines Zweiwegefahrzeugkranes zum kombinierten Straßen- und Schieneneinsatz mit den Merkmalen der vorliegenden Erfindung ist durch die folgenden beschriebenen Arbeitsschritte gekennzeichnet:
a) Der Zweiwegefahrzeugkran wird auf seinem Straßenfahrwerk zur Einsatzstelle über das Gleis gefahren und ausgerichtet,
b) das erste im hochgeklappten Zustand am Fahrgestell des Gerätes montierte und gesicherte Schienendrehgestell wird über ein Zugglied mit dem über dem Schienendrehgestell positionierten Kranausleger verbunden,
c) nach Lösen der Sicherung wird das Schienendrehgestell am Zugglied hängend durch Absenken des Kranauslegers auf der Schiene abgesetzt,
d) der Kranausleger wird um 180° verschwenkt und über das Zugglied mit dem zweiten Schienendrehgestell verbunden,
e) nach dem Lösen der Sicherung wird das zweite Schienendrehgestell am Zugglied hängend durch Absenken des Kranauslegers auf der Schiene ab gesetzt,
f) der Zweiwegefahrzeugkran wird über seine Abstützzylinder so weit hochgefahren, dass das Straßenfahrwerk von der Schiene abhebt und die Bolzensteckverbindungen zwischen Schienendrehgestell bzw. Zwischenrahmen und Fahrgestell des Gerätes gesteckt werden können,
g) die Abstützzylinder werden eingefahren.

Mit einem solchen Arbeitsverfahren wird der Zweiwegefahrzeugkran schienengängig und kann nunmehr selbst oder fremdangetrieben auf der Schiene verfahren werden.

Insgesamt wird mit der Erfindung eine einfache und funktionssichere Lösung geschaffen, mit der die Rüstzeit eines vom Straßenbetrieb in den Schienenbetrieb umzurüstenden Fahrzeuges deutlich verkürzt wird.

Ein Ausführungsbeispiel der Erfindung ist in der Zeichnung dargestellt und wird nachfolgend beschrieben. Es zeigt:
Fig. 1 einen erfindungsgemäßen Zweiwegefahrzeugkran bei Straßenfahrt,
Fig. 2 den Zweiwegefahrzeugkran unmittelbar vor dem Aufgleisen der Schienendrehgestelle.
Fig. 3 den Zweiwegefahrzeugkran beim Aufgleisen der Schienendrehgestellt mit angehobenem Straßenfahrwerk,
Fig. 4 den aufgegleisten Zweiwegefahrzeugkran und
Fig. 5 Einzelheiten des Aufgleisvorganges in zwei Ansichten.

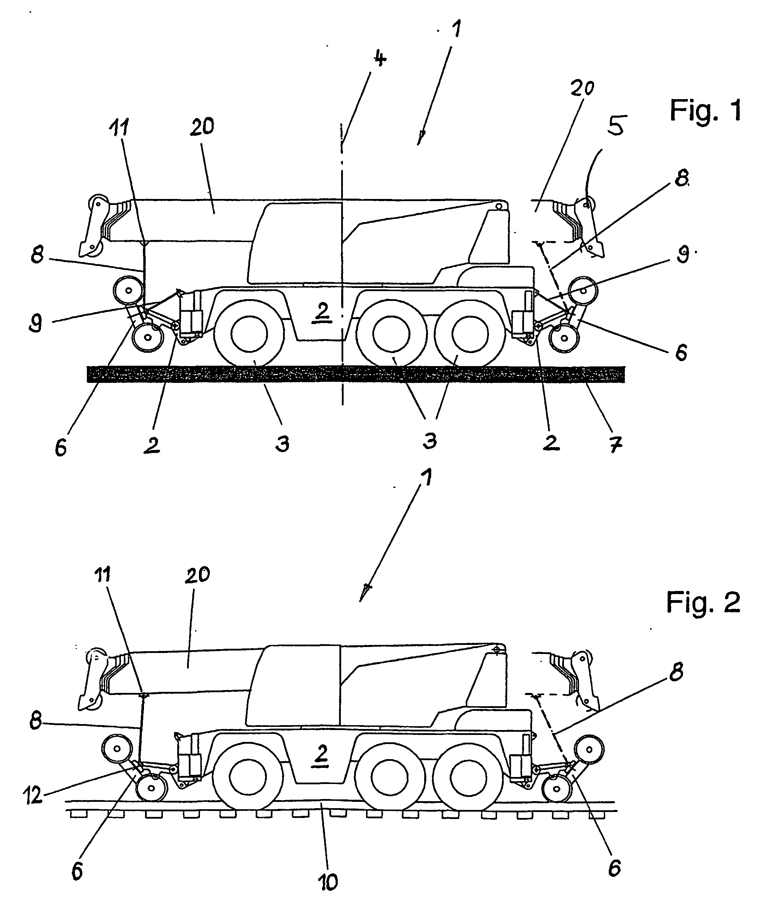

In Figur 1 ist der Zweiwegefahrzeugkran 1 in seiner Straßentransportstellung dargestellt. Das Gerät steht auf dem am Fahrgestell angeordneten Reifenfahrwerk 3, auf dem Fahrgestell 2 ist drehbar der Kranausleger 20 angeordnet, der um mindestens 180° um eine senkrechte Achse schwenkbar ist, wie in der rechten Zeichnungshälfte bei 5 angedeutet ist. An beiden Seiten des Fahrwerkes 2 sind nach oben geklappte Schienendrehgestelle 6 erkennbar, die für den Transport auf der Straße oder dem Boden 7 mit den Zugstangen 8 bzw. 9 in ihrer hochgeklappten Stellung gehalten werden.

Figur 2 zeigt dasselbe Gerät unmittelbar vor dem Aufgleisen. Der Zweiwegefahrzeugkran 1 ist dazu mit dem Reifenfahrwerk 3 über das Gleis 10 gefahren und wurde für den nachfolgenden Aufgleisvorgang ausgerichtet. Durch Absenken des Kranauslegers 20 wird das mit dem Zugglied 8 an den Anlenkpunkten 11 am Kranausleger und 12 am Schienendrehgestell verbundene Schienendrehgestell 6 abgesenkt und auf der Schiene 10 abgesetzt. Nach Lösen des Zuggliedes 8 verschwenkt der Kranausleger 20 in die rechts in der Zeichnung bei 5 angedeutete um 180° versetzte Stellung. Das Zugglied 8 wird erneut mit dem Kranausleger 20 und dem Schienendrehgestell 6 verbunden und der Absenkvorgang des Schienendrehgestells 6 wird wiederholt.

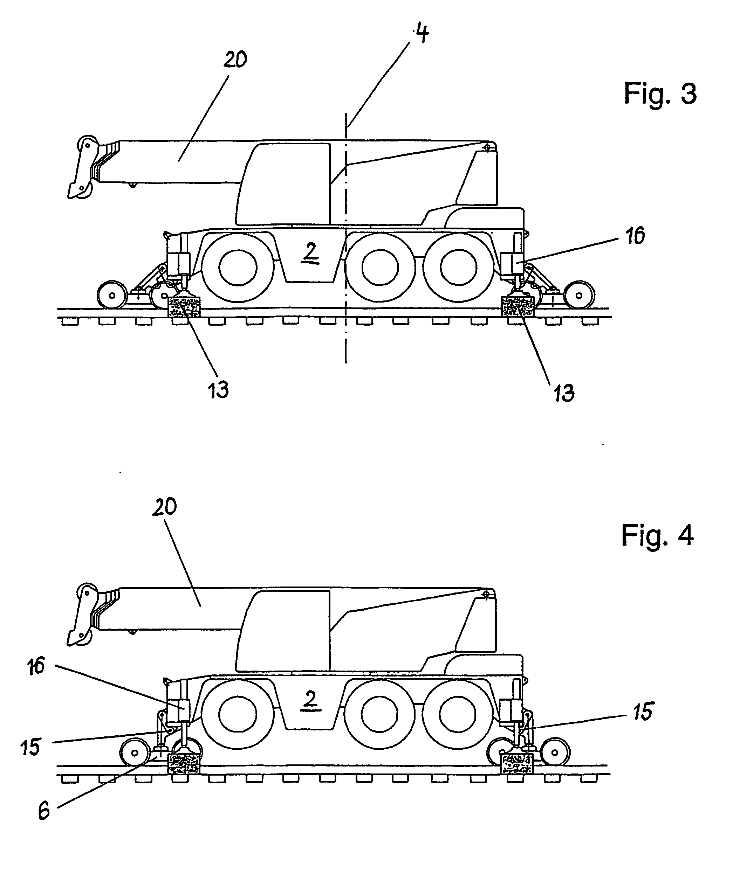

Wie in Figur 3 dargestellt, werden sodann die Abstützungen 13 des Zweiwegefahrzeugkranes 1 mit Hilfe der Hydraulikzylinder 16 ausgefahren und das Gerät wird vom Boden 7 abgehoben. Da die Zugstangen 8 inzwischen gelöst wurden, haben sich sich die Schienendrehgestelle 6 infolge der Schwerkraft beim Anheben des Gerätes nach unten bewegt und auf dem Gleis selbsttätig abgesetzt. Beim weiteren Anheben des Zweiwegefahrzeugkranes 1 gelangt dieser in die in Figur 4 dargestellte Stellung; die Schienendrehgestelle 6 sind weiter nach unten geschwenkt. In dieser Stellung erfolgt ein Verbolzen 15 der Schienendrehgestelle 6 mit dem Fahrzeugrahmen 2, der Aufgleisvorgang ist damit beendet und die Abstützungen 13 können zur Schienenfahrt des Zweiwegefahrzeugkranes 1 eingefahren werden.

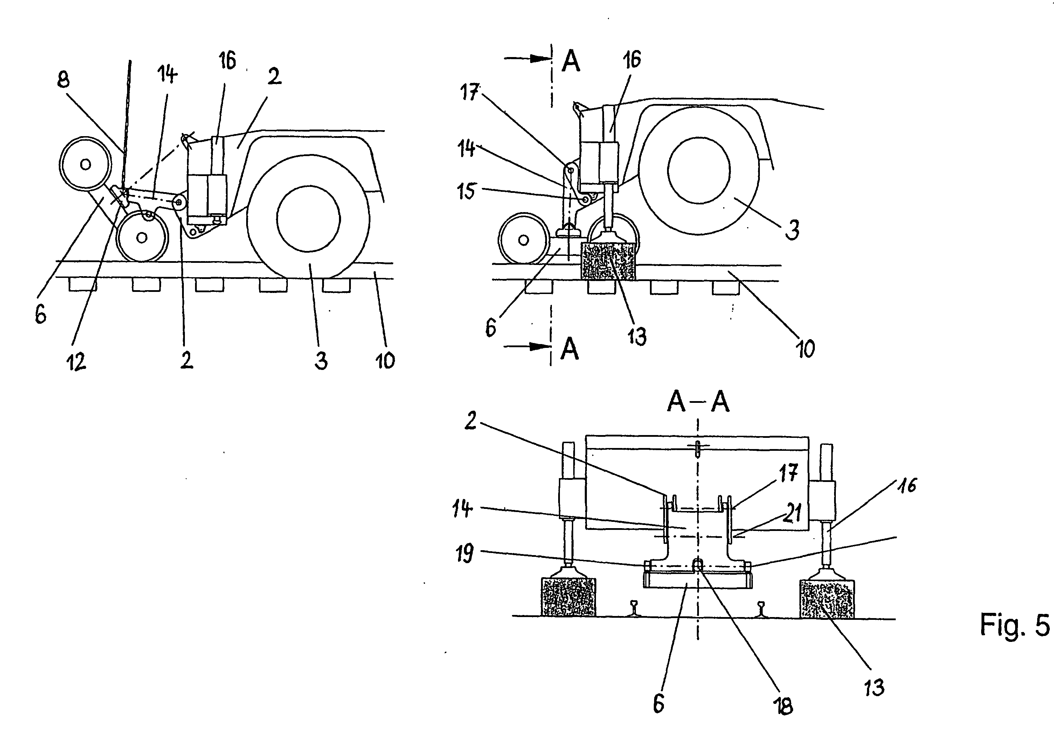

In Figur 5 sind weitere Einzelheiten der Erfindung vergrößert schematisch dargestellt. Erkennbar ist zwischen dem Schienendrehgestell 6 und dem Fahrgestell 2des Zweiwegefahrzeugkranes 1 der Zwischenrahmen 14 angeordnet, der im Wesentlichen H-förmig ausgebildet ist. Der Zwischenrahmen 14 ist an seinem einen Ende über zwei Steckbolzen 17, die die horizontale Schwenkachse bilden, mit dem Fahrzeugrahmen 2 des Zweiwegefahrzeugkranes 1 verbunden und ist an seinem anderen Ende über ein Kugelgelenk 18 mit dem Schienendrehgestell verbunden. In der Drehachse des Kugelgelenkes 18 sind quer zur Fahrtrichtung drehbar gelagerte Gleitplatten 19 angeordnet, die die Kippkräfte von dem H-förmigen Zwischenrahmen 14 auf das Schienendrehgestell 6 übertragen.

Wie in der rechten Darstellung der Figur 5 erkennbar ist, sind zur Sicherung des Aufgleiszustandes im H-förmigen Zwischenrahmen 14 zwei Aufnahmebohrungen für Sicherungsbolzen 15 vorgesehen, mit Bohrungen am Fahrgestell 2 zur Deckung gebracht und verbolzt werden müssen. Die Sicherungsbolzen können automatisch oder manuell gesteckt und gezogen werden. Am H-förmigen Zwischenrahmen 14 sind Anlenkungen 12 für das als Zugstange 8 ausgebildete Zugglied vorgesehen, die auch für die Verladung des Schienendrehgestells 6 auf einen Anhänger oder ein Begleitfahrzeug verwendet werden können.

### Bezugszeichenliste

- 1: Zweiwegefahrzeugkran
- 2: Fahrgestell
- 3: Reifenfahrwerk
- 4: Senkrechte Achse
- 5: Verschwenkter Kranausleger
- 6: Schienendrehgestelle
- 7: Straße oder Boden
- 8: Zugstange
- 9: Zugstange
- 10: Gleis
- 11: Anlenkpunkt am Kranausleger
- 12: Anlenkpunkt am Schienendrehgestell
- 13: Abstützungen
- 14: Zwischenrahmen
- 15: Verbolzung
- 16: Hydraulikzylinder
- 17: Schwenkachse
- 18: Gleitplatte
- 19: Sicherungsbolzen
- 20: Zweiwegefahrzeugkran zum kombinierten Straßen- und Schieneneinsatz

## Patentansprüche

1. Zweiwegefahrzeugkran (1) zum kombinierten Straßen- und Schieneneinsatz, mit einem zur Schienenfahrt des Gerätes vom Boden abhebbaren Straßenfahrwerk (3) und einem Schienenfahrwerk (6), bestehend aus mindestens je einem vorne und hinten an das Fahrgestell (2) des Gerätes anschließbaren Schienendrehgestell (6), sowie mit einem wipp- und schwenkbaren Kranausleger (20)
**dadurch gekennzeichnet,**
**dass** jedes Schienendrehgestell (6) derart um eine horizontal und quer zur Fahrzeuglängsachse verlaufende Schwenkachse (17) klappbar an dem Fahrgestell (2) des Gerätes anlenkbar ist und zur Schienenfahrt um diese Schwenkachse (17) mittels des Kranauslegers (20) aus einer oberen Ruhestellung in seine aufgeschiente Transportstellung verschwenkbar ist, wozu im Abstand von der quer zur Fahrzeuglängsachse verlaufenden Schwenkachse (17) an jedem Schienendrehgestell (6) bzw. an jedem, jeweils mit dem Schienendrehgestell (6) verbundemen Zwischenrahmen (14) mindestens ein Anlenkpunkt (12) für ein Zugglied (8) vorgesehen ist, das einerseits mit dem Anlenkpunkt (12) und andererseits mit dem oberhalb des Schienendrehgestelles (6) bzw. jedes Zwischenrahmens (14) positionierbaren Kranausleger (20) verbindbar ist.

2. Zweiwegefahrzeugkran nach Anspruch 1,
**dadurch gekennzeichnet,**
**dass** zwischen jedem Schienendrehgestell (6) und dem Fahrgestell (2) des Gerätes je ein Zwischenrahmen (14) vorgesehen ist, mit dem das daran befestigte Schienendrehgestell (6) am Fahrgestell (2) des Gerätes klappbar angelenkt ist.

3. Zweiwegefahrzeugkran nach Anspruch 1 oder 2,
**dadurch gekennzeichnet,**
**dass** der Anlenkpunkt (12) an jedem Schienendrehgestell (6) bzw. jedem Zwischenrahmen (14) mit dem Fahrgestell (2) des Gerätes verbunden ist.

4. Zweiwegefahrzeugkran nach einem der Ansprüche 1 bis 3,
**dadurch gekennzeichnet,**
**dass** das Zugglied (8) aus einem Seil, einer Kette oder einer Stange besteht.

5. Zweiwegefahrzeugkran nach einem der Ansprüche 1 bis 4,
**dadurch gekennzeichnet,**
**dass** das Zugglied (8) aus einem Spannzug besteht.

6. Zweiwegefahrzeugkran nach einem der Ansprüche 1 bis 5,
**dadurch gekennzeichnet,**
**dass** jedes Schienendrehgestell (6) bzw. jeder Zwischenrahmen (14) in seiner aufgegleisten Transportstellung und in seiner Ruhestellung in seiner jeweiligen Stellung abgesichert festlegbar ist.

7. Zweiwegefahrzeugkran nach einem der Ansprüche 1 bis 6,
**dadurch gekennzeichnet,**
**dass** die Festlegung jedes Schienendrehgestelles (6) bzw. jedes Zwischenrahmens (14) durch Sicherungsbolzen (15) zwischen Schienendrehgestell (6) bzw. Zwischenrahmen (14) und Fahrgestell (2) des Gerätes erfolgt.

8. Aufgleisverfahren eines Zweiwegefahrzeugkranes (1) zum Straßen- und Schieneneinsatz mit den Merkmalen nach einem der Ansprüche 1 bis 7, **gekennzeichnet durch** die nachfolgend beschriebenen Arbeitsschritte:
a) der Zweiwegefahrzeugkran wird (1) auf seinem Straßenfahrwerk (3) zur Einsatzstelle über das Gleis gefahren und ausgerichtet,
b) das erste im hochgeklappten Zustand am Fahrgestell (2) des Gerätes (1) montierte und gesicherte Schienendrehgestell (6) wird über ein Zugglied (8) mit dem über dem Schienendrehgestell (6) positionierten Kranausteger (20) verbunden,
c) nach Lösen der Sicherung wird das Schienendrehgestell (6) am Zugglied (8) hängend **durch** Absenken des Kranauslegers (20) auf der Schiene abgesetzt,
d) der Kranausleger (20) wird um 180° verschwenkt und über das Zugglied (8) mit dem zweiten Schienendrehgestell (6) verbunden,
e) nach Lösen der Sicherung wird das zweite Schienendrehgestell (6) am Zugglied (8) hängend **durch** Absenken des Kranauslegers (20) auf der Schiene abgesetzt,
f) der Zweiwegefahrzeugkran (1) wird über seine Abstützzylinder (13, 16) so weit hochgefahren, dass das Straßenfahrwerk (3) von den Schienen abhebt und die Bolzensteckverbindungen (15) zwischen Schienendrehgestell (6) bzw. Zwischenrahmen (14), und Fahrgestell (2) des Gerätes (1) gesteckt werden können,
g) die Abstützzylinder (13, 16) werden eingefahren.

## Claims

1. Bimodal rail-road crane (1) for combined road and rail usage, having a road travelling mechanism (3), which can be raised from the ground for the purpose of rail travel of the device, and a rail travelling mechanism (6), consisting of at least one rail bogie (6) which can be connected to the front and one rail bogie (6) which can be connected to the rear of the running gear (2) of the device in each case, and having a crane jib (20) which can rock and pivot, **characterised in that** each rail bogie (6) can be folded in such a way about a pivot axis (17) extending horizontally and transversely with respect to the vehicle longitudinal axis and can be articulated to the running gear (2) of the device and for the purpose of travel on rails can be pivoted about this pivot axis (17) by means of the crane jib (20) from an upper non-operative position to its rail-going transport position, for which purpose at a spaced interval from the pivot axis (17) extending transversely with respect to the vehicle longitudinal axis at least one articulation point (12) for a pulling member (8) is provided on each rail bogie (6) or on each intermediate frame (14) which is connected in each case to the rail bogie (6), said pulling member can be connected on the one hand to the articulation point (12) and on the other hand to the crane jib (20) which can be positioned above the rail bogie (6) or each intermediate frame (14).

2. Bimodal rail-road crane as claimed in claim 1, **characterised in that** between each rail bogie (6) and the running gear (2) of the device there is provided in each case an intermediate frame (14), by means of which the rail bogie (6) attached thereto is articulated to the running gear (2) of the device in such a manner as to be able to fold.

3. Bimodal rail-road crane as claimed in claim 1 or 2, **characterised in that** the articulation point (12) on each rail bogie (6) or each intermediate frame (14) is connected to the running gear (2) of the device.

4. Bimodal rail-road crane as claimed in any one of claims 1 to 3, **characterised in that** the pulling member (8) consists of a cable, a chain or a rod.

5. Bimodal rail-road crane as claimed in any one of claims 1 to 4, **characterised in that** the pulling member (8) consists of a tensioning pull.

6. Bimodal rail-road crane as claimed in any one of claims 1 to 5, **characterised in that** each rail bogie (6) or each intermediate frame (14) in its rail-going transport position and in its non-operative position can be fixed in a secured manner in its respective position.

7. Bimodal rail-road crane as claimed in any one of claims 1 to 6, **characterised in that** each rail bogie (6) or each intermediate frame (14) is fixed by fastening bolts (15) between the rail bogie (6) or the intermediate frame (14) and the running gear (2) of the device.

8. Rail engagement method of a bimodal rail-road crane (1) for road and rail usage having the features as claimed in any one of claims 1 to 7, **characterised by** the following working steps:
a) the bimodal rail-road crane (1) is driven and aligned on its road travelling mechanism (3) to its point of deployment over the track,
b) the first rail bogie (6) which is mounted and secured in the folded-up state on the running gear (2) of the device (1) is connected via a pulling member (8) to the crane jib (20) which is positioned above the rail bogie (6),
c) upon release of the locking mechanism, the rail bogie (6) suspended on the pulling member (8) is set down on the rail by lowering the crane jib (20),
d) the crane jib (20) is pivoted through 180° and is connected via the pulling member (8) to the second rail bogie (6),
e) upon release of the locking mechanism, the second rail bogie (6) suspended on the pulling member (8) is set down on the rail by lowering the crane jib (20),
f) the bimodal rail-road crane (1) is moved up by its support cylinders (13, 16) to such an extent that the road travelling mechanism (3) lifts up from the rails and the bolt connection assemblies (15) can be inserted between the rail bogie (6) or intermediate frame (14) and the running gear (2) of the device (1),
g) the support cylinders (13, 16) are retracted.

## Revendications

1. Grue automotrice rail-route (1) pour une utilisation combinée sur rail et sur route, laquelle grue comporte un mécanisme de roulement sur route (3) qui peut être relevé du sol et qui est utilisé pour faire rouler le système sur route et un mécanisme de roulement (6) sur rail constitué d'au moins un bogie (6) pouvant être raccordé à l'avant et à l'arrière au châssis (2) ainsi que d'une flèche de grue (20) apte à basculer et pivoter,
**caractérisée en ce que**
chaque bogie (6) peut être articulée de façon repliable sur le châssis (2) du système autour d'un axe de pivotement (17) s'étendant horizontalement et transversalement à l'axe longitudinal de la grue automotrice et, pour le transport sur rail, est apte à pivoter autour de cet axe de pivotement (17) au moyen de la flèche de grue (20) depuis une position de repos supérieure dans une position de transport sur rail, ce pour quoi il est prévu à distance de l'axe de pivotement (17) s'étendant transversalement à l'axe longitudinal de la grue automotrice au niveau de chaque bogie (6) resp. de chaque faux-châssis (14) raccordé au bogie (6) au moins un point d'articulation (12) destiné à l'élément de traction (8) qui peut être raccordé d'une part au point d'articulation (12) et d'autre part à la flèche de grue (20) positionnable au-dessus du bogie (6) resp. de chaque faux-châssis (14).

2. Grue automotrice rail-route selon la revendication 1, **caractérisée en ce qu'**il est prévu entre chaque bogie (6) et le châssis (2) du système un faux-châssis (14) permettant l'articulation de façon repliable du bogie (6), fixé au faux-châssis (14), au niveau du châssis (2) du système.

3. Grue automotrice rail-route selon la revendication 1 ou 2, **caractérisée en ce que** le point d'articulation (12) au niveau de chaque bogie (6) resp. chaque faux-châssis (14) est raccordé au châssis (2) du système.

4. Grue automotrice rail-route selon l'une des revendications 1 à 3, **caractérisée en ce que** l'élément de traction (8) est constitué par un câble, une chaîne ou une barre.

5. Grue automotrice rail-route selon l'une des revendications 1 à 4, **caractérisée en ce que** l'élément de traction (8) est constitué par un dispositif de serrage.

6. Grue automotrice rail-route selon l'une des revendications 1 à 5, **caractérisée en ce que** chaque bogie (6) resp. chaque faux-châssis (14) peut être fixé dans sa position de transport sur voie et dans sa position de repos en étant sécurisé dans sa position respective.

7. Grue automotrice rail-route selon l'une des revendications 1 à 6, **caractérisée en ce que** la fixation de chaque bogie (6) resp. chaque faux-châssis (14) est effectuée par des boulons de protection (15) entre le bogie (6) resp. le faux-châssis (14) et le châssis (2) du système.

8. Procédé de mise sur voie d'une grue automotrice rail-route (1) pour une utilisation sur route et sur rail, laquelle grue présente les caractéristiques selon l'une des revendications 1 à 7, **caractérisé par** les étapes opératoires décrites ci-dessous :
a) la grue automotrice rail-route (1) est déplacée et orientée sur un mécanisme de roulement sur route (3) vers l'emplacement d'utilisation au-dessus de la voie,
b) le premier bogie (6) monté et sécurisé à l'état relevé au niveau du châssis (2) du système (1) est raccordé par un élément de traction (8) à la flèche de grue (20) positionnée au-dessus du bogie (6),
c) après avoir libéré la sécurité, le bogie (6) est abaissé, en étant suspendu à l'élément de traction (8), sur le rail en abaissant la flèche de grue (20),
d) la flèche de grue (20) est pivotée de 180° et raccordée au deuxième bogie (6) par l'élément de traction (8),
e) après avoir libéré la sécurité, le deuxième bogie (6) est abaissé, en étant suspendu à l'élément de traction (8), sur le rail en abaissant la flèche de grue (20),
f) la grue automotrice rail-route (1) est soulevée au-dessus de ses vérins-supports (13, 16) jusqu'à ce que le mécanisme de roulement sur route (3) soit soulevé des rails et que les jonctions par boulons (15) puissent être placées entre le bogie (6) resp. le faux-châssis (14) et le châssis (2) du système (1),
g) les vérins-supports (13, 16) sont rentrés.
